# EUROPÄISCHE PATENTSCHRIFT

(11) **EP 3 043 941 B1**
(45) Veröffentlichungstag und Bekanntmachung des Hinweises auf die Patenterteilung: **11.11.2020**
(21) Anmeldenummer: 14759222.4
(22) Anmeldetag: 08.09.2014
(51) Int. Cl.: B23B 31/20, B23B 31/00, B23B 31/117

(54) **SPANNVORRICHTUNG**
CHUCK
MANDRIN

(30) Priorität: 12.09.2013 DE 102013110043
(43) Veröffentlichungstag der Anmeldung: 20.07.2016
(73) Patentinhaber: Haimer GmbH, 86568 Igenhausen (DE)
(72) Erfinder: HAIMER, Franz, 86568 Igenhausen (DE); KÜGLE, Wolfgang, 86551 Aichach-Griesbeckerzell (DE)
(74) Vertreter: Charrier Rapp & Liebau
(86) Internationale Anmeldenummer: PCT/EP2014/069049
(87) Internationale Veröffentlichungsnummer: WO 2015/036353

(56) Entgegenhaltungen:
- WO-A1-93/02822
- CH-A- 269 249
- DE-A1- 2 013 229
- DE-A1- 2 329 064
- DE-A1-102006 048 447
- DE-A1-102011 052 747
- US-A- 2 391 550
- US-A- 3 311 383

## Beschreibung

Die Erfindung betrifft eine Spannvorrichtung nach dem Oberbegriff des Anspruchs 1 sowie eine Werkzeugaufnahme nach dem Oberbegriff des Anspruchs 12.
Eine derartige Spannvorrichtung und eine derartige Werkzeugaufnahme gehen beispielsweise aus der DE 20 13 229 A1 hervor.

Aus der DE 10 2011 113 494 A1 ist eine Spannvorrichtung bekannt, die in Form eines Spannzangenfutters ausgebildet ist und eine Werkzeugaufnahme, eine in eine Öffnung in der Werkzeugaufnahme eingesetzte Spannzange und eine Spannmutter zur axialen Verschiebung der Spannzange gegenüber der Werkzeugaufnahme umfasst. Die Spannzange weist eine zylindrische Bohrung zur Aufnahme eines Werkzeugschafts eines Werkzeugs und eine konische Außenfläche zur Anlage an einer korrespondierenden konischen Innenfläche der Werkzeugaufnahme auf Um eine radiale Beweglichkeit der Spannzange und damit eine Spannung des in der zylindrischen Bohrung der Spannzange angeordneten Werkzeugschafts zu ermöglichen, weist die Spannzange mehrere in Umfangsrichtung verteilte Längsschlitze auf. Die zur Spannung des Werkzeugschafts notwendige radiale Kraft auf die Spannzange wird dadurch erreicht, dass die Spannmutter über eine Gewindeverbindung mit der Werkzeugaufnahme verbunden ist und bei einem Verdrehen der Spannmutter gegenüber der Werkzeugaufnahme die Spannzange mit der konischen Außenfläche gegen die konische Innenfläche in der Werkzeugaufnahme verschiebt. Hierdurch wird die Spannzange radial zusammengedrückt und damit der Werkzeugschaft in der zylindrischen Bohrung der Spannzange gespannt. Bei einem Spannen der Spannzange durch ein Verdrehen der Spannmutter gegenüber der Werkzeugaufnahme kann es jedoch gerade bei sehr hohen Spannkräften zwischen der Spannmutter und der Spannzange zu einer erhöhten Reibung und damit einhergehend zu einer Drehmomentübertragung von der Spannmutter auf die Spannzange kommen, wodurch die Spannzange in sich tordiert. Als Folge kann eine zuverlässige Spannung des Werkzeugschafts durch die Spannzange oftmals nicht gewährleistet werden.

Um diesen Nachteil zu vermeiden, ist aus der WO 96/05012 A1 bekannt, zwischen der Spannmutter und der Spannzange ein Druckstück anzuordnen, das gegenüber der Spannmutter drehbar gelagert ist. Über dieses Druckstück ist die Spannzange durch die Spannmutter gegenüber der Werkzeugaufnahme axial verschiebbar, wobei jedoch die Reibung zwischen der Spannmutter und dem Druckstück stark reduziert ist. Gerade bei sehr hohen Spannkräften kann jedoch auch bei einer derartigen Konstruktion eine Drehmomentübertragung von der Spannmutter auf die Spannzange nicht zuverlässig verhindert werden. Um eine einfache Demontage der Spannzange aus der Werkzeugaufnahme zu ermöglichen, ist es zudem üblich, die Spannzange mittels einer Schnappverbindung mit der Spannmutter zu verbinden, so dass die Spannzange beim Lösen der Spannmutter aus der Werkzeugaufnahme herausgezogen wird. Gerade bei hohen Spannkräften kann der Kraftaufwand, um die Spannzange aus der Aufnahme wieder herauszuziehen, jedoch erheblich sein, da Spannzange und Werkzeugaufnahme in Selbsthemmung reibschlüssig miteinander verbunden sein können. In vielen Fällen ist dann die Schnappverbindung zu schwach, um die notwendige Zugkraft zu übertragen. Ferner kann es bei den im Stand der Technik befindlichen Spannzangen durch eine suboptimale Verteilung der Längsschlitze gerade bei hohen Drehmomenten und Spannkräften zu einer ungleichen Verteilung der Spannkraft kommen, da die Spannzange nicht gleichmäßig flexibel auf die Spannkraftübertragung reagiert.

Aufgabe der Erfindung ist es, ein sicheres Spannen und Lösen eines Werkzeugschafts in der Spannzange auch bei sehr hohen Spannkräften zu ermöglichen.

Diese Aufgabe wird durch eine Spannvorrichtung mit den Merkmalen des Anspruchs 1 und durch eine Werkzeugaufnahme nach Anspruch 12 gelöst. Vorteilhafte Ausgestaltungen der Erfindung sind in den Unteransprüchen angegeben.

Die erfindungsgemäße Spannvorrichtung zeichnet sich dadurch aus, dass das Druckstück Koppelelemente zur verdrehgesicherten Verbindung mit korrespondierenden Gegenelementen der Werkzeugaufnahme aufweist. Hierdurch kann zuverlässig ein relatives Verdrehen des Druckstücks gegenüber der Werkzeugaufnahme verhindert werden, so dass auch eine Drehmomentübertragung auf die Spannzange vermieden wird. Die Koppelelemente können z.B. als Vorsprünge in Form von Stiften oder dergleichen und die dazu korrespondierenden Gegenelemente als Aufnahmen in Form von Bohrungen oder dergleichen ausgebildet sein. Selbstverständlich können jedoch auch die Koppelelemente als Aufnahme für korrespondierende Gegenelemente in Form von Vorsprüngen ausgebildet sein.

In einer vorteilhaften Ausführungsform sind das Druckstück und die Spannzange über eine Kupplung verdrehgesichert und lösbar derart miteinander verbunden, dass das Druckstück und die Spannzange eine vordefinierte Winkelposition zueinander einnehmen. Die Kupplung kann zweckmäßig als Bajonett-Verschluss ausgebildet sein. Hierdurch wird eine einfach und schnell zu bedienende sowie winkeltreue Verbindung zwischen der Spannzange und dem Druckstück ermöglicht, die auch die zum Lösen erforderlichen Zugkräfte übertragen kann. Zudem ist es auch nicht notwendig, die Spannzange beim Verbinden mit dem Druckstück zu verformen, wie dies bei den üblichen Schnappverbindungen der Fall ist.

Um eine verdrehgesicherte Positionierung der Spannzange in einer definierten Winkellage in der Werkzeugaufnahme zu erreichen, ist vorgesehen, dass die Spannzange Rastnasen zum verdrehgesicherten Eingriff in korrespondierende Rastnuten in der Werkzeugaufnahme aufweist. Hierdurch kann ebenfalls ein Tordieren der Spannzange sowohl beim Spannen durch die Spannmutter als auch im Betrieb durch die Drehmomente auf das Werkzeug vermieden werden. Auch hier gilt, dass die Rastnasen auch an der Werkzeugaufnahme sowie die Rastnuten an der Spannzange angeordnet sein können.

Zweckmäßigerweise kann die Spannzange an einer Innenseite Sperrelemente zur verdrehgesicherten - bevorzugt formschlüssigen - Verbindung mit dem Werkzeug aufweisen. Hierdurch wird das Werkzeug zuverlässig in der Spannzange gehalten und ein erhöhter Verschleiß durch eine Relativbewegung zwischen dem Werkzeug und der Spannzange wird vermieden.

Um eine einfache Montage der mit dem Druckstück mittels der Kupplung verbundenen Spannzange in der Werkzeugaufnahme zu ermöglichen, kann bevorzugt vorgesehen sein, dass die Rastnuten der Werkzeugaufnahme die gleiche relative Winkellage zu den Gegenelementen der Werkzeugaufnahme aufweisen, wie die Rastnasen der Spannzange zu den Koppelelementen des Druckstücks. Dies wird unter anderem durch die entsprechend reproduzierbare winkelgenaue Kupplung zwischen der Spannzange und dem Druckstück, beispielsweise in Form des Bajonett-Verschlusses, erreicht. Hierdurch wird sichergestellt, dass die Rastnasen der Spannzange und die Koppelelemente des Druckstücks zuverlässig, schnell und ohne weitere Einstellarbeiten in die entsprechenden Rastnuten bzw. Gegenelemente eingeführt werden können.

Zweckmäßig kann vorgesehen sein, dass die Rastnasen an der Spannzange weiter gegenüber der Spannzange hervorstehen als die Koppelelemente gegenüber dem Druckstück. Hierdurch wird gewährleistet, dass bei der Montage zuerst die Rastnasen in Kontakt mit der Werkzeugaufnahme kommen und durch Verdrehen in Eingriff mit den Rastnuten bringbar sind. Sobald die Rastnasen zumindest teilweise in die Rastnuten der Werkzeugaufnahme eingreifen, sind auch die Koppelelemente aufgrund der entsprechend abgestimmten Winkellage exakt zu den Gegenelementen in der Werkzeugaufnahme positioniert und können ineinander geschoben werden. Anschließend kann die Spannmutter mittels der Gewindeverbindung mit der Werkzeugaufnahme verbunden werden.

In einer bevorzugten Ausführungsform ist das Druckstück gegenüber der Spannmutter drehbar mittels mindestens einem Tonnenlager gelagert. Zweckmäßig können die Tonnen dieses Tonnenlagers in Kreuzanordnung zueinander angeordnet sein, was die Übertragung sehr hoher Kräfte ermöglicht.

Um eine gute Zentrierung der Spannmutter gegenüber der Werkzeugaufnahme zu erreichen, kann die Spannmutter zylindrische Innenflächen zur zentrierenden Anlage an korrespondierenden Außenflächen der Werkzeugaufnahme aufweisen. Hierdurch wird vermieden, dass sich eine außermittige Positionierung der Spannmutter gegenüber der Werkzeugaufnahme negativ auf die Spannzange und damit auf die Spannung des Werkzeugs auswirkt.

Einen weiteren Aspekt der Spannzange stellen die Längsschlitze der Spannzange dar, die in die Spannzange eingebracht werden. Umfangreiche Versuche haben gezeigt, dass die Form der Längsschlitze und das Schlitzmuster gerade bei hohen Drehmomenten entscheidend für die optimale Spannkraftübertragung sind.

Um folglich eine sichere Spannung bei hohen Drehmomenten zu erzeugen, ist eine Lösung die Spannzange mit mindestens zwei Längsschlitzpaketen bestehend aus mindestens drei Längsschlitzen auszuführen, um somit die optimale Flexibilität der Spannzange und damit eine ideale Kraftübertragung zu gewährleisten. Diese Längsschlitzpakete bestehen aus einem ersten Längsschlitz, der die Spannzange beginnend von einer ersten Stirnseite der Spannzange mindestens bis zur Hälfte der Spannzangenlänge durchzieht, einem zweiten Längsschlitz, der die Spannzange von einer der ersten Stirnseite der Spannzange gegenüberliegenden zweiten Stirnseite bis mindestens zur Hälfte der Spannzangenlänge durchzieht und einem dritten Längsschlitz, der die Spannzange mindestens zur Hälfte durchzieht, jedoch einen Abstand zur ersten Stirnseite und zur zweiten Stirnseite der Spannzange aufweist. Durch eine derartige Ausbildung der Längsschlitzpakete wird eine relativ verzugsfreie Verformung der Spannzange beim Spannvorgang ermöglicht. Die Spannzange wird zwar radial zusammengedrückt, die in der Spannzange angeordnet zylindrische Bohrung zur Aufnahme eines Werkzeugschafts verliert dabei jedoch nicht ihre zylindrische Form. Insbesondere die Mantellinien der Bohrung bleiben weitgehend parallel zueinander und zur Drehachse. Damit lässt sich eine besonders sichere Spannung aufgrund des optimalen Flächenkontakts zwischen der Bohrung und Werkzeugschaft bei hoher Rundlaufgenauigkeit erzielen.

Die Längsschlitzpakete sind in einer vorteilhaften Ausführungsform im gleichen Winkel zueinander positioniert. In einer besonders vorteilhaften Version weist die Spannzange 3, 4, 5, 6, 7 oder 8 Längsschlitzpakete auf. Die Dimensionierung richtet sich nach dem Durchmesser des zu spannenden Werkzeugschafts. Es können auch mehrfache gleichartige Längsschlitze in einem Längsschlitzpaket angeordnet sein.

In nicht erfindungsgemäßen Ausführungsformen ist die Spannzange mit den Längsschlitzpaketen auch in Spannvorrichtungcn aus dem Stand der Technik anwendbar und damit sehr flexibel einsetzbar.

Weitere Besonderheiten und Vorzüge der Erfindung ergeben sich aus der folgenden Beschreibung eines bevorzugten Ausführungsbeispiels anhand der Zeichnung. Es zeigen:
- **Fig. 1**: eine Schnittdarstellung durch eine erfindungsgemäße Spannvorrichtung;
- **Fig. 2**: eine Detailansicht des Details A aus Figur 1;
- **Fig. 3**: eine weitere Schnittdarstellung durch die Spannvorrichtung aus Figur 1;
- **Fig. 4**: eine Detailansicht des Details B aus Figur 3;
- **Fig. 5**: eine Detailansicht des Details C aus Figur 3 und
- **Fig. 6**: eine Detailansicht der Spannvorrichtung in Figur 1.

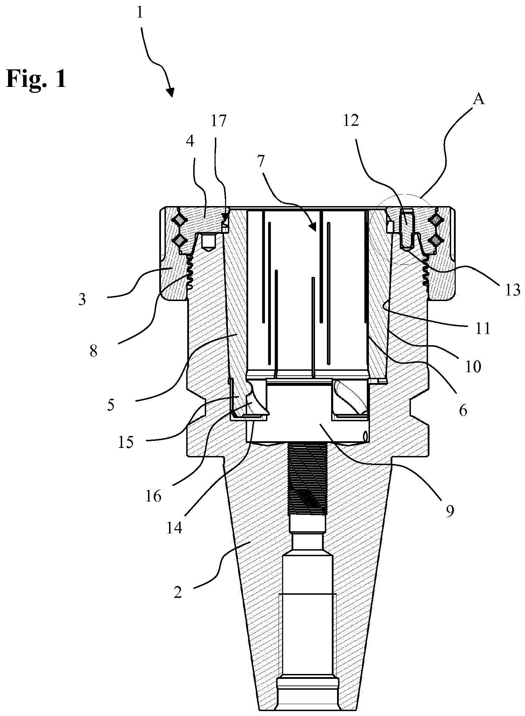

In Figur 1 ist eine Schnittdarstellung durch eine als Spannzangenfutter ausgebildete Spannvorrichtung 1 gezeigt. Die Spannvorrichtung 1 umfasst eine Werkzeugaufnahme 2, eine Spannmutter 3, ein Druckstück 4 und eine Spannzange 5. Die Spannzange 5 weist eine zylindrische Bohrung 6 auf, in die ein Werkzeugschaft eines nicht dargestellten Werkzeugs eingesetzt und gehalten werden kann. Um den Werkzeugschaft zu spannen, ist die Spannzange 5 in radialer Richtung verformbar, was durch mehrere Längsschlitzpakete 7 erreicht wird, die in Umfangsrichtung der Spannzange 5 gleichmäßig verteilt angeordnet sind. Eine radiale Verformung der Spannzange 5 wird durch ein axiales Verschieben der Spannzange 5 gegenüber der Werkzeugaufnahme 2 erreicht. Bei einer Drehung der Spannmutter 3, welche mittels einer Gewindeverbindung 8 mit der Werkzeugaufnahme 2 verbunden ist, kann die Spannzange 5 mittels dem Druckstück 4, das zwischen der Spannmutter 3 und der Spannzange 5 angeordnet ist, in Längsrichtung der Werkzeugaufnahme 2 in eine zentrale Öffnung 9 in der Werkzeugaufnahme 2 verschoben werden. Um aus dieser Längsverschiebung der Spannzange 5 relativ zu der Werkzeugaufnahme 2 eine radiale Kraft auf die Spannzange 5 zu bewirken, weist die Spannzange 5 eine konische Außenfläche 10 auf, die sich an einer korrespondierenden konischen Innenfläche 11 in der Öffnung 9 der Werkzeugaufnahme 2 abstützt. Durch eine Bewegung der Spannzange 5 in Richtung der Werkzeugaufnahme 2 wird damit eine radial nach innen gerichtete Kraft auf die Spannzange 5 erzeugt, wodurch die Spannzange 5 zusammengedrückt wird und ein in der Bohrung 6 der Spannzange 5 befindliches Werkzeug zuverlässig gespannt werden kann.

Durch die Anordnung des Druckstücks 4 zwischen der Spannmutter 3 und der Spannzange 5 wird eine Drehmomentübertragung zwischen der Spannmutter 3 und der Spannzange 5 reduziert. Das Druckstück 4 weist zudem mehrere über den Umfang verteilte Koppelelemente 12 auf, die in korrespondierende Gegenelemente 13 in der Werkzeugaufnahme 2 eingreifen, wodurch ein Verdrehen des Druckstücks 4 gegenüber der Werkzeugaufnahme 2 zuverlässig verhindert wird.

Wie aus Figur 1 zudem hervorgeht, weist die Öffnung 9 der Werkzeugaufnahme 2 in Umfangsrichtung verteilte Rastnuten 14 auf, in die dazu korrespondierende Rastnasen 15 an der Spannzange 5 eingreifen. Hierdurch wird eine verdrehgesicherte Verbindung zwischen der Spannzange 5 und der Werkzeugaufnahme 2 erreicht. Drehmomente, die im Betrieb auf das Werkzeug wirken, können folglich keine Drehbewegung zwischen der Spannzange 5 und der Werkzeugaufnahme 2 bewirken. Um auch eine Drehbewegung und den damit verbundenen Verschleiß zwischen dem Werkzeug und der Spannzange 5 wirkungsvoll zu verhindern, sind an der zylindrischen Bohrung 6 oder bevorzugt an den Innenseiten der Rastnasen 15 Sperrelemente 16 ausgebildet, die in die zylindrische Bohrung 6 der Spannzange 5 vorstehen und eine formschlüssige Verbindung mit dem Werkzeugschaft des Werkzeugs bilden.

Die Rastnasen 15 sind auf der der Werkzeugaufnahme 2 zugewandten Seite der Spannzange 5 angeordnet. Zwischen den Rastnasen 15 und der Werkzeugaufnahme 2 ist ein Spalt von wenigen Hundertstel Millimetern ausgebildet, so dass sich die die Rastnasen 15 an der Werkzeugaufnahme 2 radial abstützen können, was besonders bei Belastung der Sperrelemente 16 durch das Werkzeug einen sicheren Halt des Werkzeugs garantiert.

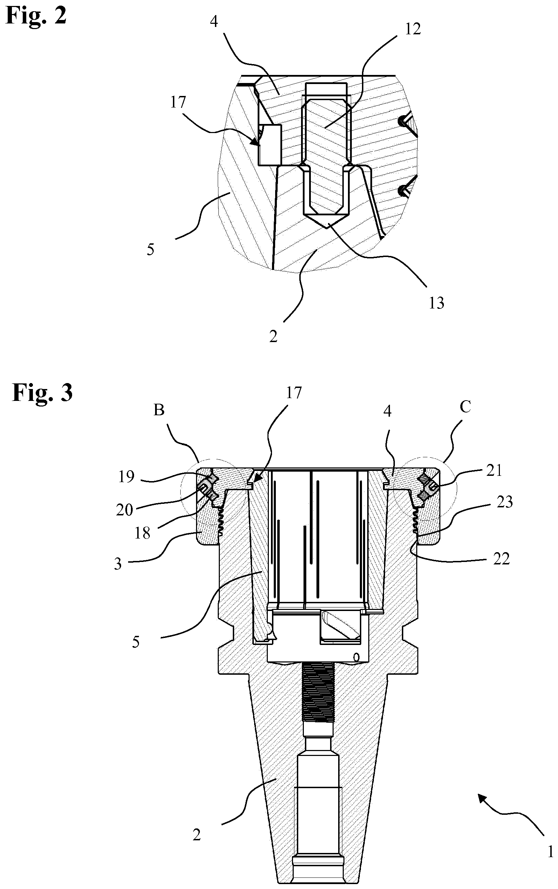

In Figur 2 ist eine Detailansicht des Details A aus Figur 1 gezeigt. Wie der Figur 2 zu entnehmen ist, sind die Koppelelemente 12 als Vorsprünge in Form von Stiften ausgebildet und mittels einer Gewindeverbindung oder einer Pressverbindung mit dem Druckstück 4 fest verbunden. Die Koppelelemente 12 greifen in die entsprechenden, als Aufnahmen in Form von Sacklöchern ausgebildeten Gegenelemente 13 ein. Die Koppelelemente 12 können in den Gegenelementen 13 ein geringfügiges radiales Spiel aufweisen, um das Einschieben der Koppelelemente 12 in die Gegenelemente 13 zu erleichtern.

Die Spannzange 5 ist mit dem Druckstück 4 mittels einer als Bajonett-Verschluss ausgebildeten Kupplung 17 oder einer ähnlichen winkelgenauen, verdrehfesten und lösbaren Verbindung verbunden. Wie bei einem Bajonett-Verschluss üblich, kann die Spannzange 5 durch Zusammenfügen mit dem Druckstück 4 und einem anschließenden relativen Verdrehen in eine verdrehgesicherte Endposition bezüglich des Druckstücks 4 gebracht werden. Die relative Lage des Druckstücks 4 zu der Spannzange 5 ist in dieser Endposition der Kupplung 17 eindeutig festgelegt und reproduzierbar. Die Anordnung der Koppelelemente 12 und der Rastnasen 15 sowie die gegenseitige Winkellage ist auf die Anordnung und gegenseitige Winkellage der Gegenelemente 13 und der Rastnuten 14 angepasst, so dass diese ineinander fluchten und ein Zusammenfügen problemlos möglich ist.

In Figur 3 ist eine weitere Schnittansicht der Spannvorrichtung 1 aus Figur 1 gezeigt. Wie zu erkennen ist, stehen die Rastnasen 15 an der Spannzange 5 weiter gegenüber der Spannzange 5 hervor als die Koppelelemente 12 gegenüber dem Druckstück 4. Hierdurch wird gewährleistet, dass bei der Montage der Einheit Spannmutter 3, Druckstück 4 und Spannzange 5 mit der Werkzeugaufnahme 2 zuerst die Rastnasen 15 in Kontakt mit der Werkzeugaufnahme 2 kommen und einfach durch gegenseitiges Verdrehen in Eingriff mit den Rastnuten 14 bringbar sind. Sobald die Rastnasen 15 zumindest teilweise in die Rastnuten 14 der Werkzeugaufnahme 2 eingreifen, sind auch die Koppelelemente 12 aufgrund der entsprechend abgestimmten Winkellage exakt zu den Gegenelementen 13 in der Werkzeugaufnahme 2 positioniert und ein einfaches abschließendes Zusammenführen und Verbinden mittels der Gewindeverbindung 8 ist möglich. Hierdurch wird eine besonders schnelle und einfache Montage der Spannvorrichtung 1 erreicht.

Wie in der Figur 3 zudem gezeigt ist, ist das Druckstück 4 gegenüber der Spannmutter 3 drehbar mittels eines ersten Wälzlagers 18 und eines zweiten Wälzlagers 19 gelagert. Die Wälzlager 18 und 19 sind als Tonnenlager ausgebildet. Die Tonnen in jedem Wälzlager sind in Kreuzanordnung angeordnet, so dass jedes Wälzlager für sich sowohl Druck- als auch Zugkräfte übertragen kann. Zudem sind Verschlussschrauben 20 und 21 vorgesehen, die einen Zugang zu den als Tonnen ausgebildeten Wälzkörpern des ersten Wälzlagers 18 und des zweiten Wälzlagers 19 ermöglichen.

Zur Zentrierung der Spannmutter 3 gegenüber der Werkzeugaufnahme 2 weist die Spannmutter 3 vor der Gewindeverbindung 8 eine zylindrische Innenfläche 22 auf, die zur Anlage an einer zylindrischen Außenfläche 23 der Werkzeugaufnahme 2 ausgebildet ist. Die gegenseitige Zentrierung wird durch einen sehr geringen Spalt zwischen der zylindrischen Innenfläche 22 und der zylindrischen Außenfläche 23 erreicht. Die Passung kann aber auch als Übergangspassung bzw. Presspassung ausgebildet sein. Bei der Montage der Spannmutter 3 kommen die zylindrische Innenfläche 22 und die zylindrische Außenfläche 23 in Kontakt miteinander und gewährleisten damit eine konzentrische Anordnung der Spannmutter 3 zu der Werkzeugaufnahme 2. Hierdurch ist sichergestellt, dass nicht durch einen exzentrischen Versatz der Spannmutter relativ zu der Werkzeugaufnahme 2 auf die Spannzange 5 radiale Kräfte, welche insbesondere die Rundlaufgenauigkeit der Spannung des Werkzeugs in der Spannzange 5 beeinträchtigen könnten, wirken.

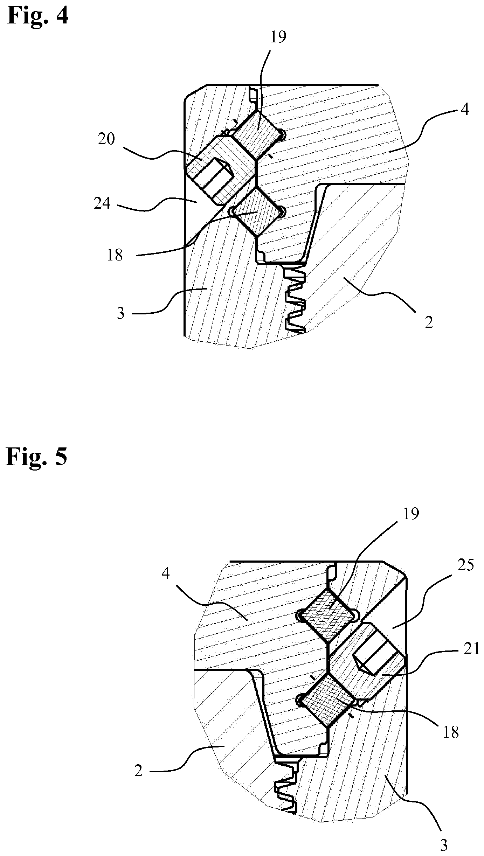

In der Detailansicht der Figur 4 ist das Detail B aus Figur 3 dargestellt. Wie Figur 4 zu entnehmen ist, sind die Wälzlager 18 und 19 in Längsrichtung der Spannvorrichtung 1 zueinander versetzt angeordnet. Um eine stabile und präzise Lagerung des Druckstücks 4 an der Spannmutter 3 zu erreichen sind bevorzugt die Wälzkörper in den Wälzlagern 18 und 19 in Kreuzanordnung zueinander ausgerichtet, so dass jedes der Wälzlager für sich Zug- und Druckkräfte übertragen kann. In einer Variante können die Wälzkörper in einem der Wälzlager in Druck- und im anderen Wälzlager in Zugrichtung angeordnet sein. Um die Wälzkörper des zweiten Wälzlagers 19 zwischen dem Druckstück 4 und der Spannmutter 3 einzufügen, ist eine Gewindebohrung 24 vorgesehen, die an dem Wälzlager 19 mündet. Um ein ungewolltes Herausfallen der Wälzkörper aus dem zweiten Wälzlager 19 zu vermeiden, wird die Gewindebohrung 24 mittels der als Madenschraube ausgebildeten Verschlussschraube 20 verschlossen.

In Figur 5 ist das Detail C aus Figur 3 in einer Detailansicht dargestellt. Im Unterschied zu Figur 4 wird bei dem in Figur 5 gezeigten Detail C durch die Verschlussschraube 21 eine Gewindebohrung 25 verschlossen, durch die Wälzkörper in das erste Wälzlager 18 eingefügt werden können.

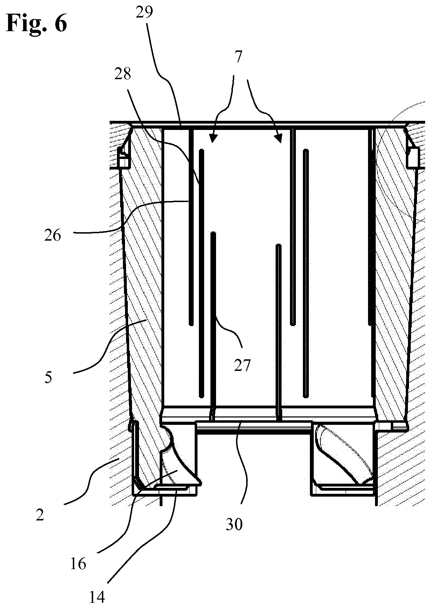

In der Detailansicht der Figur 6 ist die Spannzange 5 aus Figur 1 dargestellt. Die Spannzange 5 weist mindestens zwei Längschlitzpakete 7 auf, die im gleichen Winkel zueinander positioniert sind. Jedes Längsschlitzpaket 7 besteht aus mindestens drei Längsschlitzen 26, 27 und 28. Ein erster Längsschlitz 26 beginnt an einer ersten Stirnseite 29 der Spannzange 5 und durchzieht die Spannzange 5 mindestens zur Hälfte der Spannzangenlänge. Ein zweiter Längsschlitz 27 durchzieht die Spannzange 5 ausgehend von einer der ersten Stirnseite 29 gegenüberliegenden zweiten Stirnseite 30 der Spannzange 5 mindestens zur Hälfte der Spannzangenlänge. Ein dritter Längsschlitz 28 durchzieht die Spannzange 5 schließlich mindestens zur Hälfte der Spannzangenlänge, weist aber einen Abstand zu der ersten Stirnseite 29 und der zweiten Stirnseite 30 auf. Die Reihenfolge der Längsschlitze 26, 27 und 28 in Umfangsrichtung der Spannzange 5 kann beliebig ausgebildet sein.

Neben der in den Figuren gezeigten Ausführungsform ist es jedoch auch nicht erfindungsgemäß möglich, die Spannzange 5 nur mittels der als Bajonett-Verschluss ausgeführten Kupplung 17 und den in die Gegenelemente 13 eingreifenden Koppelelementen 12 drehfest gegenüber der Werkzeugaufnahme 2 auszubilden. In diesem Fall kann auf die Ausbildung der Rastnuten 14 in der Öffnung 9 der Werkzeugaufnahme 2 verzichtet werden. Um auch das Werkzeug drehfest gegenüber der Werkzeugaufnahme 2 zu befestigen, kann weiterhin vorgesehen sein, dass sich die Rastnasen 15 radial an der Werkzeugaufnahme 2 abstützen und an ihrer Innenseite Sperrelemente 16 zur formschlüssigen Verbindung mit dem Werkzeug aufweisen.

## Patentansprüche

1. Spannvorrichtung (1) für ein Werkzeug, mit einer Werkzeugaufnahme (2), einer in einer Öffnung (9) in der Werkzeugaufnahme (2) eingesetzten Spannzange (5) zum Spannen des Werkzeugs, einer Spannmutter (3) zur axialen Verschiebung der Spannzange (5) gegenüber der Werkzeugaufnahme (2) und einem zwischen der Spannmutter (3) und der Spannzange (5) angeordneten und gegenüber der Spannmutter (3) drehbar gelagerten Druckstück (4), über das die Spannzange (5) durch die Spannmutter (3) gegenüber der Werkzeugaufnahme (2) axial verschiebbar ist, wobei die Spannmutter (3) mittels einer Gewindeverbindung (8) mit der Werkzeugaufnahme (2) verbunden ist und das Druckstück (4) Koppelelemente (12) zur verdrehgesicherten Verbindung mit korrespondierenden Gegenelementen (13) der Werkzeugaufnahme (2) aufweist **dadurch gekennzeichnet, dass** die Spannzange (5) oder die Werkzeugaufnahme (2) Rastnasen (15) zum verdrehgesicherten Eingriff in korrespondierende Rastnuten (14) in der Werkzeugaufnahme (2) bzw. der Spannzange (5) aufweist.

2. Spannvorrichtung nach Anspruch 1, **dadurch gekennzeichnet, dass** die Koppelelemente (12) an dem Druckstück (4) als Vorsprünge oder Aufnahmen und die Gegenelemente (13) an der Werkzeugaufnahme (2) als dazu korrespondierende Aufnahmen bzw. Vorsprünge ausgebildet sind.

3. Spannvorrichtung nach Anspruch 1 oder 2, **dadurch gekennzeichnet, dass** das Druckstück (4) und die Spannzange (5) über eine Kupplung (17) verdrehgesichert und lösbar derart miteinander verbunden sind, dass das Druckstück (4) und die Spannzange (5) eine vordefinierte Winkelposition zueinander einnehmen.

4. Spannvorrichtung nach Anspruch 3, **dadurch gekennzeichnet, dass** die Kupplung (17) in Form eines Bajonett-Verschlusses ausgebildet ist.

5. Spannvorrichtung nach einem der Ansprüche 1 bis 4, **dadurch gekennzeichnet, dass** die Rastnasen (15) der Spannzange (5) an einer Innenseite Sperrelemente (16) zur verdrehgesicherten Verbindung mit dem Werkzeug aufweisen.

6. Spannvorrichtung nach einem der Ansprüche 1 bis 5, **dadurch gekennzeichnet, dass** die Rastnuten (14) der Werkzeugaufnahme (2) die gleiche relative Winkellage zu den Gegenelementen (13) der Werkzeugaufnahme (2) aufweisen, wie die Rastnasen (15) der Spannzange (5) zu den Koppelelementen (12) des Druckstücks (4).

7. Spannvorrichtung nach einem der Ansprüche 1 bis 6, **dadurch gekennzeichnet, dass** die Rastnasen (15) weiter gegenüber der Spannzange (5) hervorstehen als die Koppelelemente (12) gegenüber dem Druckstück (4).

8. Spannvorrichtung nach einem der vorhergehenden Ansprüche, **dadurch gekennzeichnet, dass** das Druckstück (4) gegenüber der Spannmutter (3) durch mindestens ein Tonnenlager (18; 19) gelagert ist, dessen Tonnen in Kreuzanordnung zueinander angeordnet sind.

9. Spannvorrichtung nach einem der vorhergehenden Ansprüche, **dadurch gekennzeichnet, dass** die Spannmutter (3) zylindrische Innenflächen (22) zur zentrierenden Anlage an korrespondierenden Außenflächen (23) der Werkzeugaufnahme (2) aufweist.

10. Spannvorrichtung nach einem der vorhergehenden Ansprüche, **dadurch gekennzeichnet, dass** die Spannzange (5) mindestens zwei Längsschlitzpakete (7) bestehend aus mindestens drei Längsschlitzen (26; 27; 28) aufweist, wobei die Längsschlitzpakete (7) aus mindestens einem ersten Längsschlitz (26), der die Spannzange (5) beginnend von einer ersten Stirnseite (29) der Spannzange (5) mindestens zur Hälfte der Spannzangenlänge durchzieht, mindestens einem zweiten Längsschlitz (27), der die Spannzange (5) von einer der ersten Stirnseite (29) gegenüberliegenden zweiten Stirnseite (30) der Spannzange (5) bis mindestens zur Hälfte der Spannzangenlänge durchzieht und mindestens einem dritten Längsschlitz (28), der die Spannzange (5) mindestens zur Hälfte durchzieht, aber einen Abstand zur ersten Stirnseite (29) und zweiten Stirnseite (30) der Spannzange (5) aufweist, bestehen.

11. Spannvorrichtung nach Anspruch 10, **dadurch gekennzeichnet, dass** die Längsschlitzpakete (7) im gleichen Winkel zueinander positioniert sind.

12. Werkzeugaufnahme (2) mit einer Öffnung (9) zur Aufnahme einer mittels einer Spannmutter (3) über ein Druckstück (4) axial beweglichen Spannzange (5) und Gegenelementen (13) zur verdrehgesicherten Verbindung mit korrespondierenden Koppelelementen (12) des mit der Spannmutter (3) drehbar verbundenen Druckstücks (4), wobei die Spannmutter (3) mittels einer Gewindeverbindung (8) mit der Werkzeugaufnahme (2) verbindbar ist, **gekennzeichnet durch** Rastnuten (14) oder Rastnasen (15) zur verdrehgesicherten Verbindung mit korrespondierenden Rastnasen (15) bzw. Rastnuten (14) einer Spannzange (5).

13. Werkzeugaufnahme nach Anspruch 12, **dadurch gekennzeichnet, dass** die Gegenelemente (13) als Vorsprünge oder als Aufnahmen für stiftförmige Koppelelemente (12) ausgebildet sind.

14. Werkzeugaufnahme nach Anspruch 12 oder 13, **gekennzeichnet durch** zylindrische Außenflächen (23) zur zentrierenden Anlage an korrespondierenden Innenflächen (22) einer Spannmutter (3).

## Claims

1. Clamping device (1) for a tool, having a tool receptacle (2), a collet (5) inserted in an opening (9) in the tool receptacle (2) and intended for clamping to tool, a clamping nut (3) for axially displacing the collet (5) with respect to the tool receptacle (2), and a pressure piece (4) which is arranged between the clamping nut (3) and the collet (5) and is rotatably mounted with respect to the clamping nut (3) and via which the collet (5) is axially displaceable with respect to the tool receptacle (2) by means of the clamping nut (3), wherein the clamping nut (3) is connected to the tool receptacle (2) by means of a threaded connection (8), and the pressure piece (4) has coupling elements (12) for rotationally secured connection to corresponding mating elements (13) of the tool receptacle (2), **characterized in that** the collet (5) or the tool receptacle (2) has latching noses (15) for rotationally secured engagement in corresponding latch grooves (14) in the tool receptacle (2) or the collet (5).

2. Clamping device according to Claim 1, **characterized in that** the coupling elements (12) on the pressure piece (4) are formed as projections or receptacles, and the mating elements (13) on the tool receptacle (2) are formed as receptacles or projections corresponding thereto.

3. Clamping device according to Claim 1 or 2, **characterized in that** the pressure piece (4) and the collet (5) are connected to one another in a rotationally secured and releasable manner via a coupling (17) in such a way that the pressure piece (4) and the collet (5) assume a predefined angular position with respect to one another.

4. Clamping device according to Claim 3, **characterized in that** the coupling (17) takes the form of a bayonet closure.

5. Clamping device according to one of Claims 1 to 4, **characterized in that** the latching noses (15) of the collet (5) have, on an inner side, blocking elements (16) for rotationally secured connection to the tool.

6. Clamping device according to one of Claims 1 to 5, **characterized in that** the latching grooves (14) of the tool receptacle (2) have the same relative angular position with respect to the mating elements (13) of the tool receptacle (2) as the latching noses (15) of the collet (5) have with respect to the coupling elements (12) of the pressure piece (4) .

7. Clamping device according to one of Claims 1 to 6, **characterized in that** the latching noses (15) project further with respect to the collet (5) than the coupling elements (12) project with respect to the pressure piece (4).

8. Clamping device according to one of the preceding claims, **characterized in that** the pressure piece (4) is mounted with respect to the clamping nut (3) by means of at least one barrel bearing (18; 19) whose barrels are arranged with respect to one another in a crosswise arrangement.

9. Clamping device according to one of the preceding claims, **characterized in that** the clamping nut (3) has cylindrical inner surfaces (22) for centring bearing on corresponding outer surfaces (23) of the tool receptacle (2).

10. Clamping device according to one of the preceding claims, **characterized in that** the collet (5) has at least two longitudinal slot packages (7) consisting of at least three longitudinal slots (26; 27; 28), wherein the longitudinal slot packages (7) consist of at least one first longitudinal slot (26), which, beginning from a first end side (29) of the collet (5) traverses the collet (5) at least to half of the collet length, at least one second longitudinal slot (27), which, from a second end side (30) of the collet (5) opposite the first end side (29), traverses the collet (5) to at least half of the collet length, and at least one third longitudinal slot (28), which traverses at least half of the collet (5) but has a distance from the first end side (29) and second end side (30) of the collet (5) .

11. Clamping device according to Claim 10, **characterized in that** the longitudinal slot packages (7) are positioned at the same angle to one another.

12. Tool receptacle (2) having an opening (9) for receiving a collet (5) which is axially movable by means of a clamping nut (3) via a pressure piece (4), and mating elements (13) for rotationally secured connection to corresponding coupling elements (12) of the pressure piece (4), which is rotatably connected to the clamping network (3), wherein the clamping network (3) can be connected to the tool receptacle (2) by means of a threaded connection (8), **characterized by** latching grooves (14) or latching noses (15) for rotationally secured connection to corresponding matching noses (15) or latching grooves (14) of a collet (5).

13. Tool receptacle according to Claim 12, **characterized in that** the main elements (13) are formed as projections or as receptacles for pin-shaped coupling elements (12).

14. Tool receptacle according to Claim 12 or 13, **characterized by** cylindrical outer surfaces (23) for centring bearing on corresponding inner surfaces (22) of a clamping nut (23).

## Revendications

1. Dispositif de fixation (1) pour un outil, comprenant un porte-outil (2), une pince de serrage (5) insérée dans une ouverture (9) du porte-outil (2) et destinée à fixer l'outil, un écrou de serrage (3) permettant le déplacement axial de la pince de serrage (5) par rapport au porte-outil (2), et une pièce de pression (4) disposée entre l'écrou de serrage (3) et la pince de serrage (5), et montée à rotation par rapport à l'écrou de serrage (3), au moyen de laquelle la pince de serrage (5) peut être déplacée axialement par rapport au porte-outil (2) par l'écrou de serrage (3), dans lequel l'écrou de serrage (3) est relié au porte-outil (2) au moyen d'un raccord fileté (8) et la pièce de pression (4) comporte des éléments d'accouplement (12) permettant de la relier de manière bloquée en rotation avec des éléments opposés (13) correspondants du porte-outil (2),
**caractérisé en ce que** la pince de serrage (5) ou le porte-outil (2) comporte des ergots d'encliquetage (15) pour un engagement bloqué en rotation dans des rainures d'encliquetage (14) correspondantes du porte-outil (2) ou de la pince de serrage (5).

2. Dispositif de fixation selon la revendication 1, **caractérisé en ce que** les éléments d'accouplement (12) sont réalisés sur la pièce de pression (4) sous la forme de saillies ou de creux et les éléments opposés (13) sont réalisés sur le porte-outil (2) sous la forme de creux ou de saillies correspondants.

3. Dispositif de fixation selon la revendication 1 ou 2, **caractérisé en ce que** la pièce de pression (4) et la pince de serrage (5) sont reliées entre elles par un dispositif de couplage (17) de manière bloquée en rotation et amovible de telle sorte que la pièce de pression (4) et la pince de serrage (5) prennent une position angulaire prédéfinie l'une par rapport à l'autre.

4. Dispositif de fixation selon la revendication 3, **caractérisé en ce que** le dispositif de couplage (17) est réalisé sous la forme d'une fermeture à baïonnette.

5. Dispositif de fixation selon l'une des revendications 1 à 4, **caractérisé en ce que** les ergots d'encliquetage (15) de la pince de serrage (5) présentent sur une face intérieure des éléments de blocage (16) permettant de les relier de manière bloquée en rotation à l'outil.

6. Dispositif de fixation selon l'une des revendications 1 à 5, **caractérisé en ce que** les rainures d'encliquetage (14) du porte-outil (2) présentent la même position angulaire relative, par rapport aux éléments opposés (13) du porte-outil (2), que les ergots d'encliquetage (15) de la pince de serrage (5) par rapport aux éléments d'accouplement (12) de la pièce de pression (4).

7. Dispositif de fixation selon l'une des revendications 1 à 6, **caractérisé en ce que** les ergots d'encliquetage (15) dépassent plus loin de la pince de serrage (5) que les éléments d'accouplement (12) par rapport à la pièce de pression (4).

8. Dispositif de fixation selon l'une des revendications précédentes, **caractérisé en ce que** la pièce de pression (4) est soutenue par rapport à l'écrou de serrage (3) par au moins un palier à barillets (18 ; 19) dont les barillets sont disposés en croix les uns par rapport aux autres.

9. Dispositif de fixation selon l'une des revendications précédentes, **caractérisé en ce que** l'écrou de serrage (3) présente des surfaces intérieures cylindriques (22) permettant un montage centré sur les surfaces extérieures (23) correspondantes du porte-outil (2) .

10. Dispositif de fixation selon l'une des revendications précédentes, **caractérisé en ce que** la pince de serrage (5) présente au moins deux ensembles de fentes longitudinales (7) composés d'au moins trois fentes longitudinales (26 ; 27 ; 28), dans lequel les ensembles de fentes longitudinales (7) sont constitués d'au moins une première fente longitudinale (26), qui passe à travers la pince de serrage (5), en partant d'une première face frontale (29) de la pince de serrage (5) jusqu'à au moins la moitié de la longueur de la pince de serrage, d'au moins une deuxième fente longitudinale (27), qui passe à travers la pince de serrage (5) depuis une deuxième face frontale (30) de la pince de serrage (5), opposée à la première face frontale (29), jusqu'à au moins la moitié de la longueur de la pince de serrage, et d'au moins une troisième fente longitudinale (28), qui passe à travers la pince de serrage (5) au moins jusqu'à la moitié de celle-ci, mais à distance de la première face frontale (29) et de la deuxième face frontale (30) de la pince de serrage (5).

11. Dispositif de fixation selon la revendication 10, **caractérisé en ce que** les ensembles de fentes longitudinales (7) sont positionnés selon le même angle l'un par rapport à l'autre.

12. Porte-outil (2) présentant une ouverture (9) destinée à recevoir une pince de serrage (5), qui est mobile axialement au moyen d'un écrou de serrage (3) par l'intermédiaire d'une pièce de pression (4), et des éléments opposés (13) pour la liaison bloquée en rotation avec des éléments d'accouplement (12) correspondants de la pièce de pression (4) reliée à rotation à l'écrou de serrage (3), dans lequel l'écrou de serrage (3) peut être relié au porte-outil (2) au moyen d'un raccord fileté (8),
**caractérisé par** des rainures d'encliquetage (14) ou des ergots d'encliquetage (15) pour une liaison bloquée en rotation avec les ergots d'encliquetage (15) ou les rainures d'encliquetage (14) correspondants d'une pince de serrage (5).

13. Porte-outil selon la revendication 12, **caractérisé en ce que** les éléments opposés (13) sont réalisés sous la forme de saillies ou sous la forme de creux destinés à des éléments d'accouplement (12) en forme de tige.

14. Porte-outil selon la revendication 12 ou 13, **caractérisé par** des surfaces extérieures cylindriques (23) permettant un montage centré sur les surfaces intérieures (22) correspondantes d'un écrou de serrage (3).
